# EUROPEAN PATENT SPECIFICATION

(11) **EP 0 353 720 B1**
(45) Date of publication and mention of the grant of the patent: **03.02.1993**
(21) Application number: 89114220.0
(22) Date of filing: 01.08.1989
(51) Int. Cl.: C08F 255/06, C08F 8/46

(54) **Process for grafting maleic anhydride onto unsaturated polyolefinic elastomers**
Verfahren zur Pfropfung von Maleinsäure-Anhydrid auf ungesättigte Elastomere von Polyolefinen
Procédé de greffage d'anhydride maléique sur des élastomères insaturés de polyoléfines

(30) Priority: 02.08.1988 IT 2161688
(43) Date of publication of application: 07.02.1990
(73) Proprietor: AUSIMONT S.p.A., I-20121 Milano (IT)
(72) Inventor: Roncetti, Lucia, Dr., I-40127 Bologna (IT); Banzi, Viviano, Dr., I-44049 Vigarano Mainarda Ferrara (IT)
(74) Representative: Barz, Peter, Dr.

(56) References cited:
- No relevant documents have been disclosed.

## Description

The present invention relates to the preparation of functionalized olefinic elastomeric polymers by grafting of maleic anhydride, which preparation is carried out by reaction in mass.

The grafting of maleic anhydride onto olefinic polymers by polymerization in mass is known in the art.

According to US-A-3,236,917, maleic anhydride is grafted onto ethylene/propylene copolymers by heating a mixture of the two components in the presence of organic peroxides. This process shows the drawback of causing, besides the grafting of maleic anhydride, a partial cross-linking between the chains of the copolymer as well.

According to US-A-3,884,882 adducts of maleic anhydride and terpolymers derived from ethylene, an alpha-olefin and a non-conjugated diene are obtained by heating mixtures of the terpolymer and the anhydride at temperatures ranging from 225 to 350°C. This process, while allowing to obtain products having a low gel content, is disadvantageous in that it requires a considerable excess of maleic anhydride in the reaction mixture in order to achieve the desired levels of grafting.

It has now surprisingly been found that the grafting of maleic anhydride onto unsaturated olefinic polymers can be carried out by mass polymerization, without encountering the above drawbacks, by allowing the reaction to take place in the presence of catalysts, said catalysts being compounds of metals of group VIII of the periodic system and having the general formula

MₙX_{z} (I)

wherein:
M = a metal of group VIII of the periodic system;
X = a counterion;
n = valence of the counterion;
z = valence of the metal.

The olefinic polymers which can be subjected to the above reaction with maleic anhydride are unsaturated polymers comprising units derived from at least two different monomers of general formula

R-CH = CH₂ (II)

wherein R = hydrogen or an alkyl group containing from 1 to 6 carbon atoms, and lower amounts of units derived from conjugated or non-conjugated dienes.

Therefore,the object of the present invention is a process for grafting maleic anhydride onto olefinic polymers by reacting, in mass and at elevated temperatures, maleic anhydride with an unsaturated olefinic (at least ter-) polymer comprising monomeric units derived from at least two different monomers of general formula

R-CH = CH₂ (II)

wherein R = hydrogen or an alkyl group having from 1 to 6, particularly 1 to 3, carbon atoms (e.g. methyl, ethyl, n-propyl, i-propyl, n-butyl, i-butyl, sec-butyl, n-pentyl and n-hexyl) and lower amounts of units derived from conjugated or non-conjugated dienic monomers, in the presence of compounds of general formula:

MₙX_{z} (I)

wherein:
M = a metal of group VIII of the periodic system;
X = a counterion;
n = valence of the counterion;
z = valence of the metal.

In the compounds of general formula (I), M preferably represents Rh and Ru, while preferred counterions are halogen ions (e.g. Cl⁻, Br⁻ and I⁻) and NO₃⁻.

Examples of particularly suitable compounds of formula (I) are RhCl₃, RhBr₃, RuCl₃ and Rh(NO₃)₃.

Among these compounds, RhCl₃ is most preferred.
Among the preferred olefinic polymers which may be used for the purpose of the present invention, are terpolymers, particularly those of ethylene, propylene and conjugated or non-conjugated dienes wherein the diene may be, for instance, 5-ethylidene-2-norbornene; 1,4-hexadiene; dicyclopentadiene; 5-methylene-2-norbornene and 1,3-butadiene.

The relative amounts of monomer units in such copolymers are not critical: they may range within very wide limits, without jeopardizing the suitability of the corresponding polymer for the process of the present invention. However, the amount of units derived from dienic monomers in said polymers usually ranges from 20 to 0.3% by weight, preferably from 10 to 0.7% by weight,and particularly from 5 to 1.0% by weight.

Preferred polymers are the ones consisting of ethylene, at least one alpha-olefin comprised by formula (I), preferably propylene, and at least one of the above mentioned dienic monomers and comprising, preferably, from 30 to 80% by weight of ethylene and from 0.5 to 15% by weight of dienic comonomer.

Polymers of ethylene, an alpha-olefin containing from 3 to 8 carbon atoms and at least one dienic monomer are well known in the art. Methods for their preparation are described, for instance, in US-A-2,933,480; 2,962,451; 3,000,866; 3,093,620; 3,093,621; 3,063,973; 3,147,230; 3,154,528; 3,260,708.

The reaction between the above unsaturated olefinic polymer and maleic anhydride, in the presence of the compounds of formula (I) (catalysts) according to the invention can be carried out by any mass process in which a good mixing of the polymer with the other components, without any substantial formation of free radicals, can be achieved. The mixing can be carried out, for instance, in a plastograph of the Brabender type or in an extruder, by feeding maleic anhydride in the molten state or in powder form. The catalyst can be introduced e.g. in the form of a powder or of a master batch based on the polymer to be reacted or incorporated in the molten maleic anhydride. The amount of catalyst preferably ranges from 0.001 to 0.1 g, particularly 0.005 to 0.05 g, per 100 g of elastomeric polymer.

The reaction temperature preferably ranges from about 120 to about 350°C, particularly from about 220 to about 280°C.

The stay times of the reagents in the mixed phase at such temperatures generally, but not necessarily, range from about 0.5 to about 5 minutes. Thereby a polymer containing from about 0.5 to about 2.5% by weight of grafted maleic anhydride is obtained.

The grafted polymer obtained by the process according to the present invention does not require any substantial purification, as free maleic anhydride is present in said polymer only in very small amounts.

When extracting with xylene at 23°C, after having kept the reaction mixture at reflux temperature for 1 hour, an insoluble fraction remains, which fraction consists of an irreversibly cross-linked polymer, which is always below 2% by weight of the crude reaction product.

The following examples are given in order to illustrate the present invention without, however, limiting it.

In the examples the following polymers were used:
- elastomer (A), an ethylene-propylene-ethylidene norbornene (ENB) terpolymer, containing, by weight, 40% of propylene and 3.5% of ENB and having a Mooney ML (1+4) viscosity at 100°C of 42.
- elastomer (B), an ethylene-propylene-butadiene terpolymer, containing, by weight, 28% of propylene, and 1.2% of butadiene and having a Mooney ML (1+4) viscosity at 100°C of 32.

The amount of grafted maleic anhydride present in the washed polymer was calculated on the reaction products by acidimetry or IR spectroscopy. The washing of the crude product was carried out by dissolving the polymer in xylene, precipitating it again by addition of acetone, filtration and washing of the precipitate with acetone several times.

In all of the examples the concentrations of fed catalyst and maleic anhydride are based on 100 parts by weight of elastomeric polymer.

### EXAMPLES 1 and 2 (comparative examples)

Copolymer A was fed into a Brabender PLE 651 plastograph heated to 270°C, keeping the speed of the rotors at 20 rpm. When the mass had reached the required temperature and the recorded stress was constant, the speed was increased to 60 rpm and powdered maleic anhydride (M.A.) was added. The mixture was allowed to react for 5 minutes and thereafter was discharged.

The content in anhydride was determined both on the crude mixture and on the washed polymer. The portion insoluble in xylene at 23°C was determined.
The conversion was calculated on the basis of the ratio of maleic anhydride present in the washed product to maleic anhydride employed.
The amounts of the reactants and the results are reported in Table I.

### EXAMPLES 3 to 6

The procedure described in examples 1 and 2 was followed, except that at the time of addition of the monomer (maleic anhydride), catalyst (RhCl₃ in powder form) was added, too.
The amounts of the reagents and the results are reported in Table I.

### EXAMPLES 7 and 8 (comparative examples)

Copolymer B was placed in a Brabender PLE 651 plastograph heated to a temperature of 270°C, keeping the speed of the rotors at 20 rpm. After temperature and stress were constant, the speed was increased to 60 rpm and powdered maleic anhydride was added.
The mixture was allowed to react for 5 minutes, and thereafter was discharged.
The amounts of the reagents and the results are reported in Table II.

### EXAMPLES 9 to 12

The procedure of examples 7 and 8 was followed, except that at the time of addition of the monomer, catalyst (RhCl₃ in powder form) was added, too.
The amounts of the reagents and the results are reported in Table II.

### EXAMPLES 13 to 16

Example 11 was repeated, discharging, however, the mixture after different reaction times.
The amounts of the reagents and the results are reported in Table III.

### EXAMPLES 17 to 19

Example 12 was repeated, using as catalyst RhBr₃, Rh(NO₃)₃ and RuCl₃ instead of RhCl₃.
The amounts of the reagents and the results are reported in Table IV.

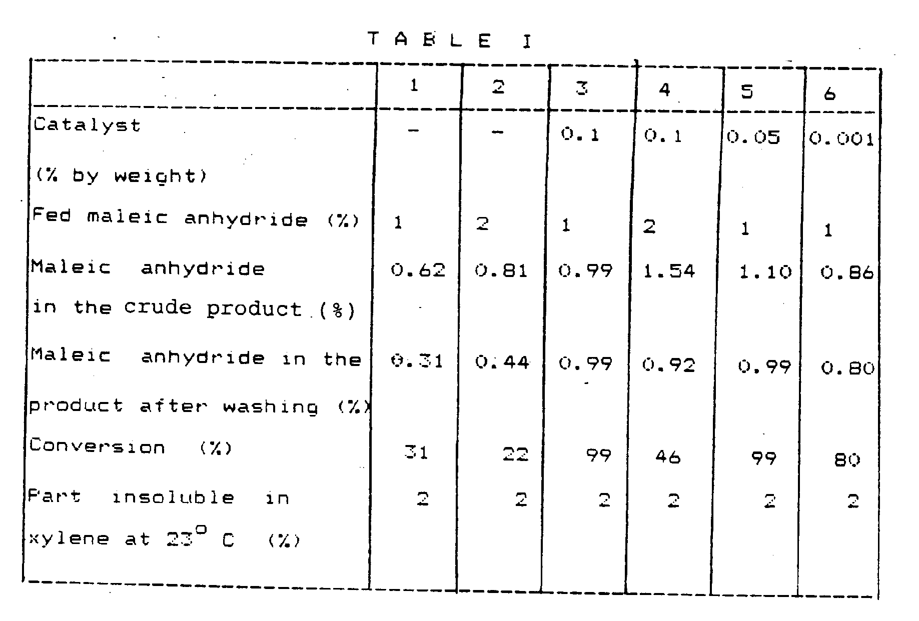

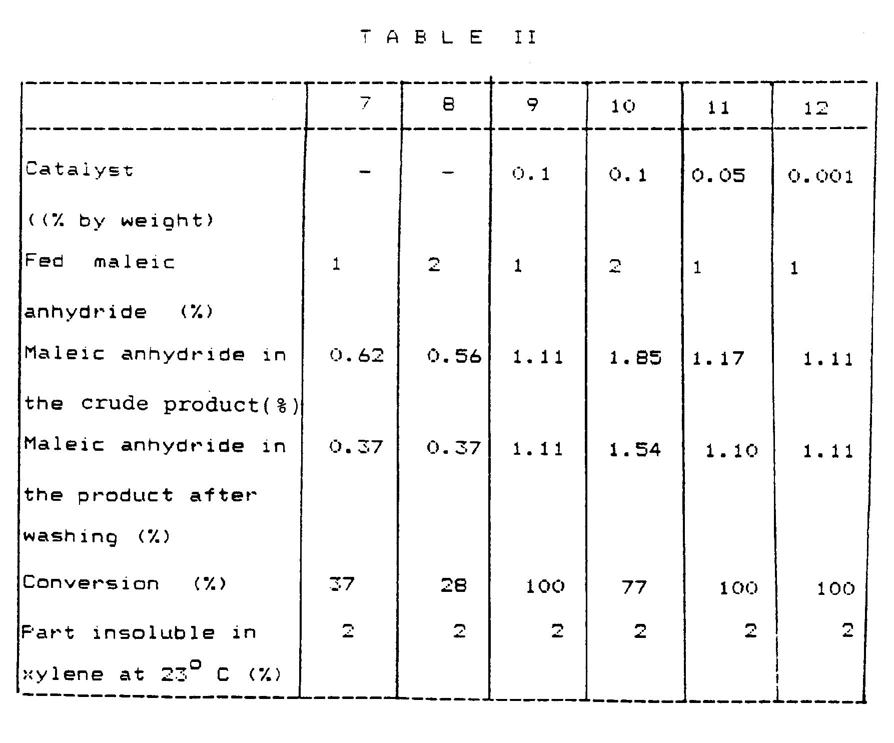

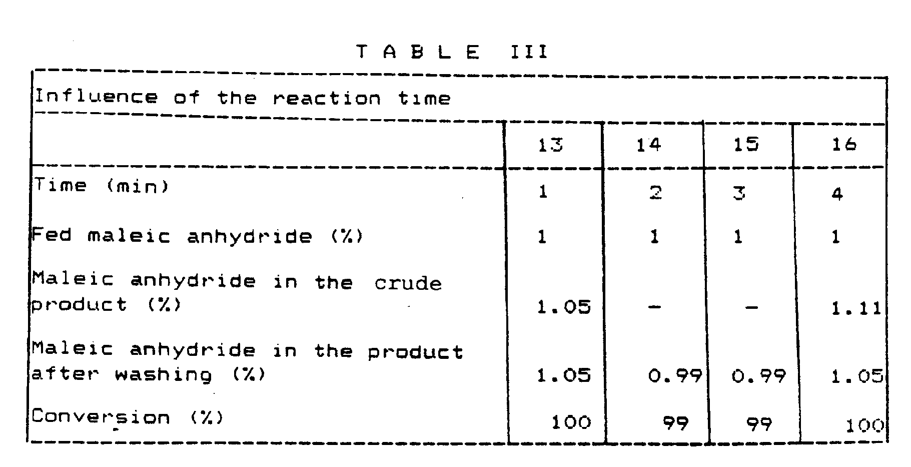

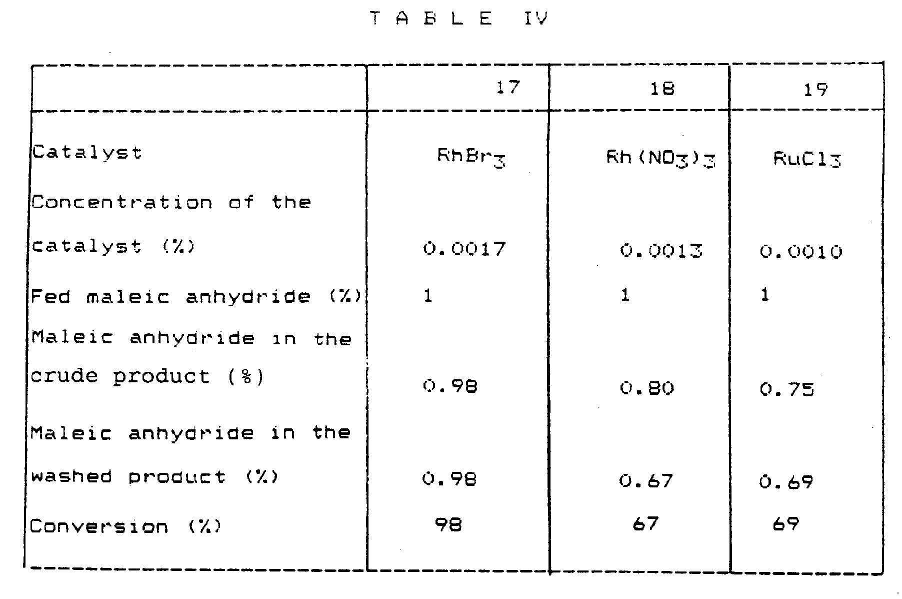

### EXAMPLES 20 and 21 (comparative examples)

In these examples benzoyl peroxide was used as radical initiator for the reaction between maleic anhydride and elastomer.

The elastomceric copolymer was placed in a plastograph type Brabender PLE 651 heated to 120°C and working at a speed of 20 rpm. When the mass had reached the required temperature and the recorded stress was constant, the speed was increased to 60 rpm and maleic anhydride and the peroxide were added. The mixture was allowed to react for 8 hours and thereafter was discharged.
The amounts of reagents and the obtained results are reported in Table V. All of the indicated amounts are expressed by weight.

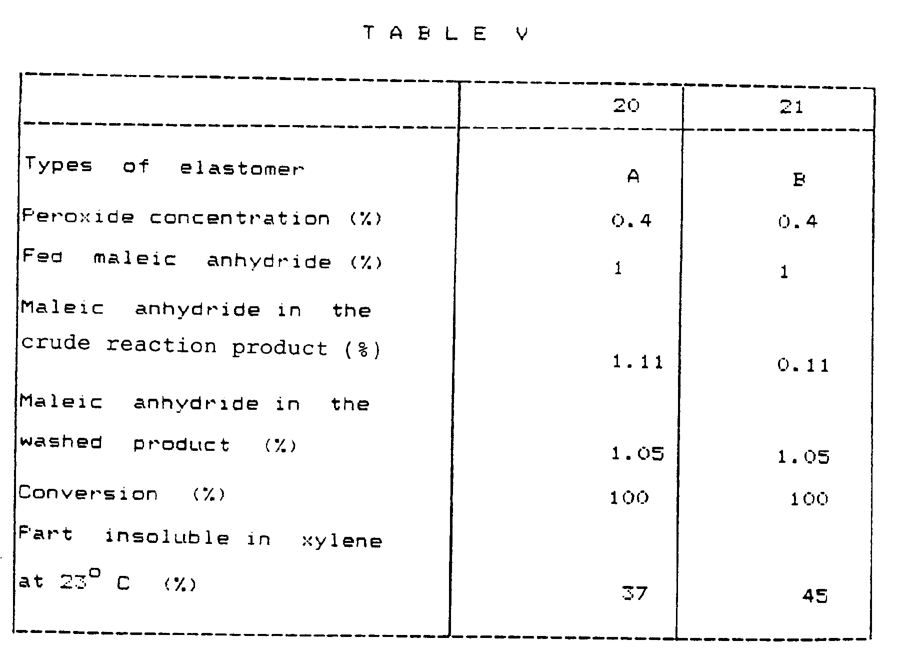

## Claims

1. Process for grafting maleic anhydride onto an unsaturated olefinic polymer comprising units derived from at least two different monomers of general formula R-CH=CH₂, wherein R is hydrogen or an alkyl group containing from 1 to 6 carbon atoms, and smaller amounts of units derived from at least one diene, which process comprises the reaction, in mass, of maleic anhydride and said polymer at elevated temperature, in the presence of at least one compound of general formula:
MₙX_{z} (I)
wherein
M = a metal of group VIII of the periodic system
X = a counterion
n = valence of the counterion
z = valence of the metal.

2. Process according to claim 1, wherein M is selected from rhodium and ruthenium.

3. Process according to claim 1, wherein the compound of formula (I) is selected from halides and nitrates of rhodium and ruthenium.

4. Process according to any one of the preceding claims, wherein the polymer comprises units derived from ethylene and propylene.

5. Process according to any one of the preceding claims, wherein the polymer is an ethylene-propylene-1,3-butadiene terpolymer.

6. Process according to any one of claims 1 to 4, wherein the polymer is an ethylene-propylene-ethylidene norbornene terpolymer.

7. Process according to any one of the preceding claims, wherein the reaction mixture is heated at temperatures of from about 120°C to about 350°C.

## Patentansprüche

1. Verfahren zum Pfropfen von Maleinsäureanhydrid auf ein ungesättigtes Olefinpolymer, welches von mindestens zwei verschiedenen Monomeren der allgemeinen Formal R-CH=CH₂, worin R Wasserstoff oder eine Alkylgruppe mit 1 bis 6 Kohlenstoffatomen ist, abgeleitete Einheiten und kleinere Mengen von mindestens einem Dien abgeleitete Einheiten umfaßt, welches Verfahren umfaßt die Reaktion von Maleinsäureanhydrid und dem Polymer in Masse bei erhöhter Temperatur in Gegenwart mindestens einer Verbindung der allgemeinen Formel:
MₙX_{z} (I)
worin
M = ein Metall der Gruppe VIII des Periodensystems
X = ein Gegenion
n = Wertigkeit des Gegenions
z = Wertigkeit des Metalls.

2. Verfahren nach Anspruch 1, worin M ausgewählt ist aus Rhodium und Ruthenium.

3. Verfahren nach Anspruch 1, worin die Verbindung der Formel (I) ausgewählt ist aus Halogeniden und Nitraten von Rhodium und Ruthenium.

4. Verfahren nach einem der vorangehenden Ansprüche, worin das Polymer von Ethylen und Propylen abgeleitete Einheiten umfaßt.

5. Verfahren nach einem der vorangehenden Ansprüche, worin das Polymer ein Ethylen-Propylen-1,3-Butadien-Terpolymer ist.

6. Verfahren nach einem der Ansprüche 1 bis 4, worin das Polymer ein Ethylen-Propylen-Ethylidennorbornen-Terpolymer ist.

7. Verfahren nach einem der vorangehenden Ansprüche, worin das Reaktionsgemisch auf Temperaturen von etwa 120°C bis etwa 350°C erhitzt wird.

## Revendications

1. Procédé pour greffer de l'anhydride maléique sur un polymère oléfinique insaturé comprenant des unités dérivant d'au moins deux monomères différents de formule générale:
R-CH = CH₂
dans laquelle:
R est un atome d'hydrogène ou un radical alkyle contenant de 1 à 6 atomes de carbone,
et des petites quantités d'unités dérivant d'au moins un diène, lequel procédé comprend la réaction, en masse, de l'anhydride maléique et dudit polymère à température élevée, en présence d'au moins un composé de formule générale:
MₙX_{z} (I)
dans laquelle:
M est un métal du groupe VIII de la classification périodique;
X est un contre-ion
n est la valence du contre-ion; et
z est la valence du métal.

2. Procédé selon la revendication 1, dans lequel M est choisi parmi le rhodium et le ruthénium.

3. Procédé selon la revendication 1, dans lequel le composé de formule (I) est choisi parmi les halogènes et les nitrates de rhodium et de ruthénium.

4. Procédé selon l'une quelconque des revendications précédentes, dans lequel le polymère est formé d'unités dérivant de l'éthylène et du propylène.

5. Procédé selon l'une quelconque des revendications précédentes, dans lequel le polymère est un terpolymère éthylène-propylène-1,3-butadiène.

6. Procédé selon l'une quelconque des revendications 1 à 4, dans lequel le polymère est un terpolymère éthylène-propylène-éthylidène-norbornène.

7. Procédé selon l'une quelconque des revendications précédentes, dans lequel le mélange réactionnel est chauffé à une température comprise entre environ 120°C et environ 350°C.
